# EUROPEAN PATENT APPLICATION

(11) **EP 4 289 648 A1**
(43) Date of publication of application: **13.12.2023**
(21) Application number: 23175369.0
(22) Date of filing: 25.05.2023
(51) Int. Cl.: B60K 1/00, B60K 1/04

(54) **ELECTRIC WORK VEHICLE**

(30) Priority: 06.06.2022 JP 2022091903
(71) Applicant: KANZAKI KOKYUKOKI MFG. CO., LTD., Hyogo 661-0981 (JP)
(72) Inventor: ARATA, Masato, Hyogo, 661-0981 (JP)
(74) Representative: Isarpatent

(57) **Abstract**

[Problem] To improve the weight balance in the front-rear direction of an electric work vehicle having a configuration in which a battery is mounted on the front side, to lower the center of gravity of the electric work vehicle, to shorten the wiring distance when a main switch is switched using an operation switch, and to prevent the length of a space inside a bonnet in a front-rear direction from becoming excessively large.

[Solution] An electric work vehicle 10 includes: front wheels and rear wheels 16 supported by a vehicle body frame 12; a driver's seat 51 provided above a rear end portion of the vehicle body frame 12; a traveling motor 20 for driving the rear wheels 16; a power transmission unit 22 that is integrated with the traveling motor 20, and reduces the power of the traveling motor 20 and transmits the power to an axle 24 that is joined to the rear wheels 16; and a battery that supplies power to the traveling motor 20 via a first inverter. The battery is disposed inside the bonnet mounted on the front side of the vehicle body frame 12, and the traveling motor 20, the power transmission unit 22, and the first inverter are disposed under the driver's seat 51.

## Description

### TECHNICAL FIELD

The present invention relates to an electric work vehicle.

### BACKGROUND ART

Work vehicles provided with a work implement are conventionally known. For example, a lawn mowing vehicle (work vehicle) provided with a lawn mowing device serving as a work implement that is driven to perform lawn mowing work and the like is conventionally known. Furthermore, among such work vehicles, electric work vehicles whose wheels are driven by a traveling motor, being an electric motor, are also being considered.

In Patent Document 1, described is an electric agricultural tractor (electric work vehicle) in which a battery is mounted inside a cover member on the front side of the vehicle, DC power from the battery is converted into AC power by an inverter, and the converted power drives a traveling motor such that the rear wheels and the front wheels are driven by the power of the traveling motor. In this electric agricultural tractor, the inverter and the traveling motor are arranged side-by-side in the front and rear under the battery, and the power of the traveling motor is transmitted to the rear wheels via a transmission under the driver's seat.
Furthermore, Patent Document 2 describes an electric agricultural tractor (electric work vehicle) in which a battery is mounted inside a bonnet or cover member on the front side of the vehicle, power is supplied from the battery to an electric motor serving as a traveling motor, the power of the electric motor is reduced by a reduction gear device inside a transmission case, and the reduced power is transmitted to the rear wheels and the front wheels.

### PRIOR ART DOCUMENT

### PATENT DOCUMENT

Patent Document 1: Japanese Unexamined Patent Application Publication No. 2021-000956 (US Publication 2022377959)
Patent Document 2: Japanese Unexamined Patent Application Publication No. 2022-60665 (WO2022075206)
Patent Document 3: Japanese Unexamined Patent Application Publication No. 2021-000953 (US Publication 2022234434)

### SUMMARY OF INVENTION

### TECHNICAL PROBLEM

In the electric work vehicle described in Patent Document 1, many heavy objects are disposed on the front side of the vehicle. Therefore, there is room for improvement from the viewpoint of improving the weight balance of the vehicle. In particular, the battery mounted on the front side of the vehicle tends to become heavy in order to extend the cruising distance. In such a case, the weight of the front side tends to become large.
Furthermore, in the electric work vehicle described in Patent Document 2, when a junction box including a switch such as a contactor or a relay that switches the electrical connection and disconnection between the battery and the traveling motor is disposed below the battery, the position of the battery becomes higher. Therefore, there is room for improvement from the viewpoint of lowering the center of gravity of the vehicle. In addition, when the switch is disposed under the battery, the distance between the switch and an operation switch becomes large. Therefore, the wiring distance becomes long when the switch is switched by the operation switch via a control device. Moreover, it is desirable to prevent the space inside the bonnet from becoming excessively large in a front-rear direction.

An object of the present invention is to improve the weight balance in the front-rear direction of an electric work vehicle having a configuration in which a battery is mounted on the front side, to lower the center of gravity of the electric work vehicle, to shorten the wiring distance when a main switch is switched using an operation switch, and to prevent the length of a space inside the bonnet in a front-rear direction from becoming excessively large.

### SOLUTION TO PROBLEM

An electric work vehicle according to the present invention includes: a vehicle body frame; front wheels and rear wheels supported by the vehicle body frame; a driver's seat provided above a rear end portion of the vehicle body frame; a traveling motor for driving the rear wheels; a power transmission unit that is integrated with the traveling motor, and that reduces a power of the traveling motor and transmits the power to an axle joined to the rear wheels; and a battery that supplies power to the traveling motor via a first inverter; wherein the battery is disposed inside a bonnet mounted on a front side of the vehicle body frame, and the traveling motor, the power transmission unit, and the first inverter are disposed under the driver's seat.

According to the electric work vehicle of the present invention, the battery is disposed inside the bonnet mounted on the front side of the vehicle body frame, and the traveling motor, the power transmission unit, and the first inverter are disposed under the driver's seat provided above the rear end portion of the vehicle body frame. As a result, in a vehicle having the battery mounted on the front side, the weight balance in the front-rear direction of the vehicle can be improved.

The electric work vehicle according to the present invention may be configured to further include: a working motor that is connected to the battery via a second inverter; a work implement that is driven by the working motor; and an inverter mounting member that is provided so as to stand on an upper surface of the power transmission unit, and has a main body plate portion extending in a left-right direction and an up-down direction; wherein at least one of the inverters among the first inverter and the second inverter are attached to a front side surface of the main body plate portion.

According to the configuration above, the inverter attached to the front side surface of the main body plate portion of the inverter mounting member can more easily dissipate heat by receiving a traveling wind when the vehicle moves forward. As a result, a temperature rise of the inverter can be suppressed, and the operational stability (suppression of thermal runaway) and durability of the inverter can be improved.

The electric work vehicle according to the present invention may be configured such that the inverter mounting member has two side plate portions extending in a front-rear direction from both left and right end portions of the main body plate portion, one of the first inverter and the second inverter is attached to the front side surface of the main body plate portion, and the other is attached to an inside surface of the side plate portion, and an upper end portion of the inverter mounting member has the driver's seat directly fixed thereto, or indirectly fixed via a support member.

According to the configuration above, heat is more easily dissipated from the first inverter and the second inverter, and the weight balance is more easily improved even when the weight of the front side of the vehicle is increased. Moreover, the rigidity of the inverter mounting member can be increased.

The electric work vehicle according to the present invention may be configured such that a heat dissipation plate is interposed between the inverter mounting member and each of the first inverter and the second inverter, and the heat dissipation plate makes contact with a heat sink provided in each of the first inverter and the second inverter.

According to the configuration above, heat is even more easily dissipated from the first inverter and the second inverter.

The electric work vehicle according to the present invention may be configured to include: the vehicle body frame; the front wheels and the rear wheels supported by the vehicle body frame; a traveling motor that drives at least one of the front wheels and the rear wheels; a steering column that covers a lower side of a steering shaft supported by the vehicle body frame, and is a steering column having an operation switch provided in an upper portion thereof; the battery that is provided on a front side of the steering column and disposed on a front side of a space inside a bonnet, which is covered by the bonnet, and provides power to the traveling motor; and a junction box disposed further on a rear side in the space inside the bonnet than the battery, and which contains a switch that switches between electrical connection and disconnection of the battery and the traveling motor; wherein the junction box is disposed in a vertical arrangement in the space inside the bonnet such that a front-rear direction length becomes shorter than an up-down direction length and a left-right direction length.

According to the electric work vehicle of the present invention, the battery is disposed on the front side of the space inside the bonnet, which is on the front side of the steering column. Further, the junction box is provided further on the rear side than the battery in a vertical arrangement. Therefore, compared to a case where the junction box is disposed below the battery, it is possible lower the center of gravity of the vehicle. Furthermore, it is possible to shorten the wiring distance when the main switch is switched using an operation switch, and it is possible to prevent the length of the bonnet space in the front-rear direction from becoming excessively large compared to a case where the junction box is disposed in a state in which it extends in the front-rear direction.

The electric work vehicle according to the present invention may be configured such that the space inside the bonnet has a metal first plate that is provided so as to stand and divide the space inside the bonnet into front and rear spaces, and the battery is disposed further forward than a front side surface of the first plate, and the junction box is attached to a rear side surface of the first plate.

According to the configuration above, the junction box can be more separated from the components further toward the front side by using the first plate. Therefore, maintenance work of the junction box can be simplified. Furthermore, because the first plate can be provided with a heat dissipation function, a temperature rise inside the junction box can be suppressed. As a result, the durability of the components inside the junction box can be improved. Moreover, the first plate can block the heat transfer from the battery to the junction box.

The electric work vehicle according to the present invention may be configured such that the space inside the bonnet has a metal second plate that is provided so as to stand and divide the space inside the bonnet further on a rear side than the first plate into front and rear spaces, a DC-DC converter is attached to a front side surface of the second plate, and a control device is attached to a rear side surface of the second plate, and the control device is electrically connected to the junction box via the DC-DC converter.

According to the configuration above, the control device can be more separated from the components further toward the front side by using the second plate. Therefore, the maintenance work of the control device can be simplified. Furthermore, because the battery, the junction box, the DC-DC converter, and the control device can be arranged in order from the front side, the wiring path of the circuit connecting the battery and the control device via the junction box and the DC-DC converter can be shortened. Moreover, because the second plate can be provided with a heat dissipation function, a temperature rise of the DC-DC converter and control device can be suppressed. This makes it possible to improve the durability of the DC-DC converter and the control device.

The electric work vehicle according to the present invention may be configured to include: two first columns that are fixed to an upper side of the vehicle body frame and separated left and right; and two second columns that are fixed to the upper side of the vehicle body frame on a rear side of the two first columns and separated left and right; wherein both left and right ends of the first plate are inserted into a first groove provided in the two first columns along an up-down direction, and both left and right ends of the second plate are inserted into a second groove provided in the two second columns along an up-down direction.

According to the configuration above, the junction box can be integrated with the first plate, and the DC-DC converter and the control device can be integrated with the second plate, and can be easily pulled out to the upper side and removed from the vehicle. Therefore, maintenance work of the junction box, the DC-DC converter, and the control device can be further simplified.

The electric work vehicle according to the present invention may be configured such that the vehicle body frame is provided with side frames along a machine front-rear direction, a battery mount is fixed to an upper side of both side frames so as to straddle both side frames, and the pair of first columns and the pair of second columns are fixed to a rear side of the battery mount.

According to the configuration above, as a result of using the battery mount to create a sub-assembly with the junction box, the DC-DC converter, and the control device, the work of mounting the battery, the junction box, the DC-DC converter, and the control device to the vehicle can be further simplified.

### ADVANTAGEOUS EFFECTS OF INVENTION

According to the electric work vehicle of the present invention, in a configuration where a battery is mounted on the front side, the weight balance in the front-rear direction of the vehicle can be improved. Furthermore, according to the electric work vehicle of the present invention, it is possible to lower the center of gravity of the vehicle, shorten the wiring distance when a main switch is switched using an operation switch, and prevent the length of a space inside a bonnet in a front-rear direction from becoming excessively large.

### BRIEF DESCRIPTION OF DRAWINGS

FIG. 1 is a schematic diagram showing an electric work vehicle according to an embodiment of the present invention as viewed from one side in the width direction, and is shown with a portion displayed as a cross-section;
FIG. 2 is a schematic diagram of an A-A section in FIG. 1;
FIG. 3 is a schematic diagram of a B-B section in FIG. 1;
FIG. 4 is a diagram of an operation switch group on an upper portion of a steering column as viewed from above the electric work vehicle in FIG. 1;
FIG. 5 is a circuit diagram of a control system mounted on the electric work vehicle in FIG. 1;
FIG. 6 is a diagram corresponding to a front side part of FIG. 1, and shows a state where the bonnet is open and the junction box and the DC-DC converter have been taken out;
FIG. 7 is a perspective view illustrating a state immediately before the battery mount, the battery, the junction box, and the DC-DC converter are mounted on the front side part of a vehicle body frame of the electric work vehicle in FIG. 1; and
FIG. 8 is a perspective view illustrating a state immediately before an inverter mounting member and an inverter are mounted on an upper side of a power transmission unit of the electric work vehicle in FIG. 1.

### DESCRIPTION OF EMBODIMENTS

An embodiment of the present invention will be described below in detail with reference to the drawings. Although a case in which the electric work vehicle is a lawn mowing vehicle will be described below, the electric work vehicle is not limited to a lawn mowing vehicle and may be another type of work vehicle that includes a work implement that performs one or more of snow removal work, excavation work, civil engineering work, and agricultural work. Furthermore, a case in which the work vehicle has a steering wheel as a travel instruction tool, and uses an accelerator pedal provided on the front side of the seat as a travel instruction tool will be mainly described below. However, this is an illustration, and in the present invention, which relates to the arrangement of at least a junction box or an inverter, a configuration is possible in which the present invention is applied to a vehicle having two operation levers on the left and right as travel instruction tools that also serve as turning instruction units. In this case, the term travel as it relates to the travel instruction tool is used to mean travel excluding turning. The shape, number, arrangement relationship of the components and the like will be illustrated for the purpose of explanation, and can be changed as appropriate according to the specifications of the work vehicle. In the following, the same components are denoted by the same reference numerals in all of the drawings, and redundant description will be omitted or simplified.

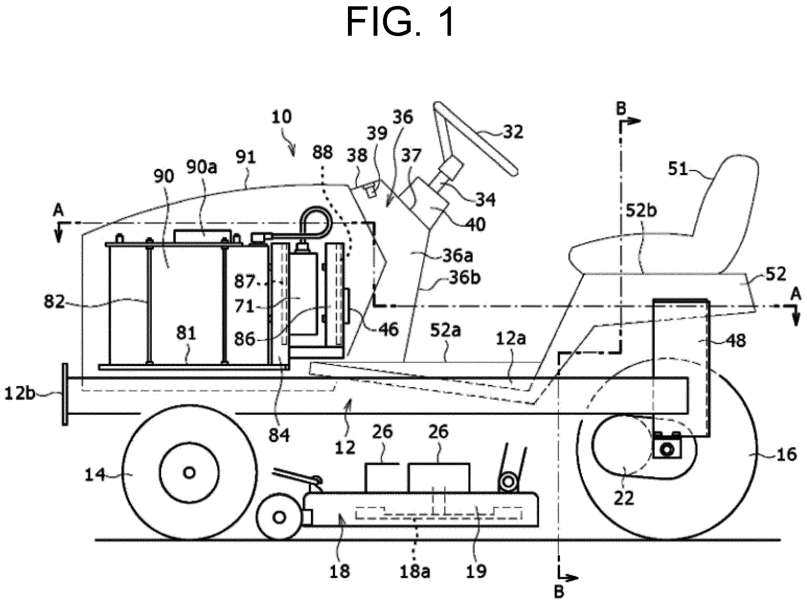

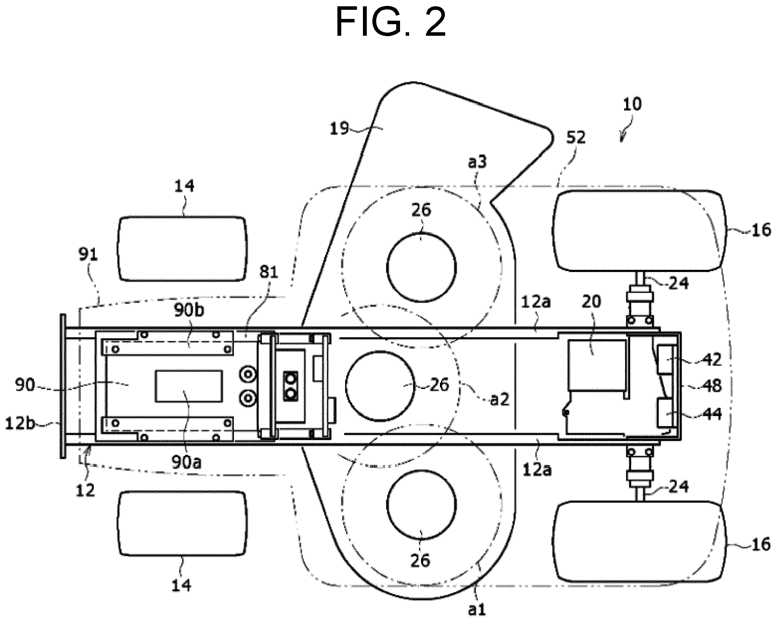

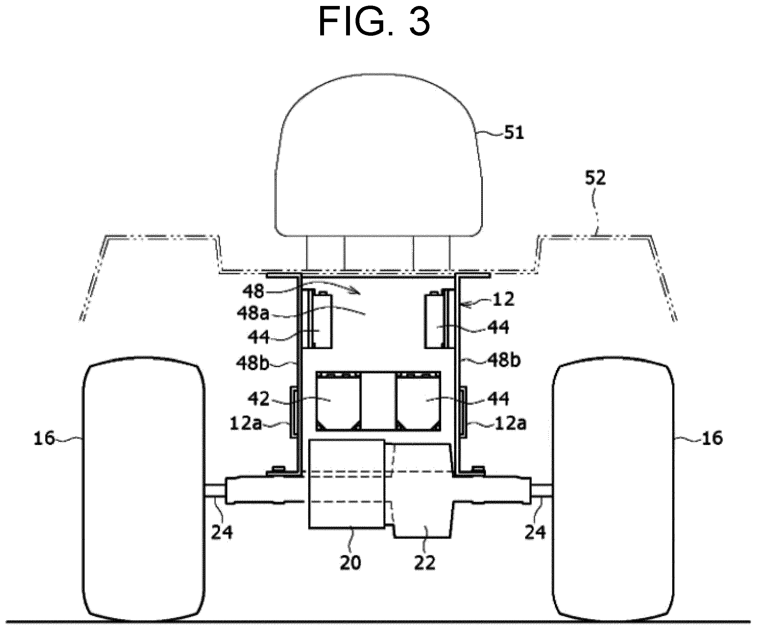

FIGS. 1 to 8 illustrate an embodiment of the present invention. FIG. 1 is a schematic diagram showing an electric work vehicle 10 according to an embodiment as viewed from one side in a left-right direction, being the width direction, and is shown with a portion displayed as a cross-section. FIG. 2 is a schematic diagram of an A-A section in FIG. 1. FIG. 3 is a schematic diagram of a B-B section in FIG. 1. Hereinafter, the electric work vehicle 10 is referred to as a vehicle 10.

The vehicle 10 is a passenger self-propelled lawn mowing vehicle suitable for lawn mowing. The vehicle 10 includes a vehicle body frame 12, two front wheels 14 on the left and right that are freely steerable and supported on the front side of the vehicle body frame 12, two rear wheels 16 on the left and right that are supported on the rear side, a lawn mowing device 18 serving as a work implement, a traveling motor 20 (FIG. 2) that drives the rear wheels 16 among the front wheels 14 and the rear wheels 16, three deck motors 26 serving as working motors, a steering wheel 32, and an accelerator pedal (not shown). The vehicle 10 further includes a traveling inverter 42, three deck inverters 44, a control device (ECU) 46, which constitute a control unit 100, and a battery 90. The traveling motor 20 and the deck motors 26 are each electric motors. The traveling inverter 42 corresponds to a first inverter, and the deck inverters 44 correspond to a second inverter.

The vehicle body frame 12 is formed into a beam structure or the like using a metal such as steel. The vehicle body frame 12 includes two side frames 12a substantially along a front-rear direction of the vehicle body on both the left and right ends, a front end connecting portion 12b that joins the front ends of the two side frames 12a, and an inverter mounting member 48 that joins the rear ends. Each of the side frames 12a is formed by including a main body plate portion along an up-down direction and the front-rear direction and two lateral plate portions projecting outward in the left-right direction from both the upper and lower end portions of the main body plate portion. Further, an opening of the side frames 12a is directed toward the center in the left-right direction of the vehicle. The front end connecting portion 12b has a plate shape projecting to the front end of the vehicle and extending in the left-right direction, and has the function of a bumper. The inverter mounting member 48 will be described in more detail later. The upper side of the rear end portions of the two side frames 12a has a driver's seat 51, on which a driver serving as the user is seated, fixed via the inverter mounting member48 and a support member 52.

The support member 52 is supported on the upper side of the left and right side frames 12a of the vehicle body frame 12, and includes a front side part 52a on which the driver that has boarded the vehicle 10 places their feet, and a rear side part 52b that rises upward toward the rear and has both left and right end portions on the rear side that serve as fender portions that cover the upper side of the two rear wheels 16. That is, on the upper end portion of the rear side part 52b of the support member 52, two shoulder portions project upward with a spacing on both the left and right sides, and the driver's seat 51 is fixed to a part that is downwardly recessed between the two shoulder portions.

The front side of the driver's seat 51 has a steering shaft 34 rotatably supported by a steering column 36, and a steering wheel 32 is fixed to the upper end of the steering shaft 34. The steering shaft 34 steers the two front wheels 14 by pushing and pulling the two front wheels 14 on the left and right via an Ackermann-type linkage mechanism (not shown) according to the rotation thereof.

An accelerator pedal (not shown) is provided on the floor on the front right of the driver's seat 51. The accelerator pedal is a seesaw type with a substantially V-shaped section that is capable of swinging around an axis along the left-right direction of the vehicle. The accelerator pedal is configured such that forward travel is instructed by depressing the front side with the toes, and the forward vehicle speed increases as the depressing amount becomes larger. On the other hand, the accelerator pedal is configured such that reverse travel is instructed by depressing the rear side with the heel, and the reverse vehicle speed increases as the depressing amount becomes larger.

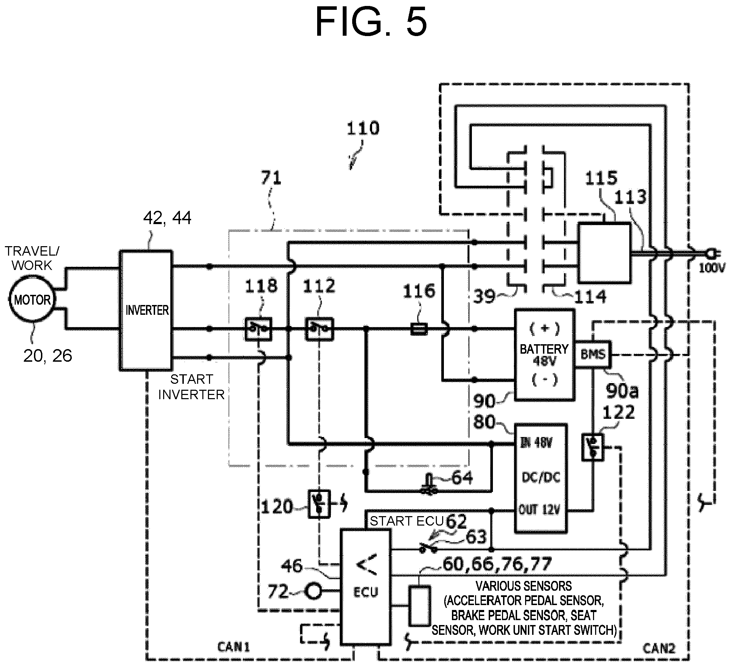

The accelerator pedal is operated to set the moving direction of the vehicle and to set the vehicle speed from zero to a predetermined value according to the depressed side and the depression operation position. When the driver takes their foot off the tread surface of the pedal, the accelerator pedal is maintained at a zero vehicle speed position by a return spring (not shown) that is mechanically joined to the accelerator pedal. The depression side and the operation position of the accelerator pedal are detected by an accelerator pedal sensor 60 (FIG. 5). The accelerator pedal sensor 60 corresponds to a travel instruction sensor. A detection signal of the accelerator pedal sensor 60 is transmitted to the control device 46. The control device 46 controls the rotation direction and the rotation speed of the traveling motor 20 based on the operation side and the operation position of the accelerator pedal.

The accelerator pedal is not limited to a seesaw type, and may be a two-pedal type with different pedals for forward travel and reverse travel. Alternatively, the accelerator pedal may be a single pedal that can be depressed in only one direction (front side) for both forward and reverse travel, and a forward/reverse switching operation tool may be provided to instruct the vehicle to switch between forward and reverse travel.

The steering column 36 covers the lower side of the steering shaft 34. Specifically, the steering column 36 includes two side plate portions 36a on the left and right that are provided so as to stand on the upper surface of the front side part 52a of the support member 52, and a rear end plate portion 36b that joins the rear ends of the two side plate portions 36a and is provided so as to stand on the upper surface of the front side part 52a. The rear end plate portion 36b is upwardly inclined toward the rear. The upper end of the rear end plate portion 36b is provided with a steering panel 37, which is a substantially rectangular plate portion that is upwardly inclined toward the front. The upper end of the steering panel 37 is provided with an upper end plate portion 38 that is increasingly inclined to the lower side toward the front. The upper end plate portion 38 is provided with a charging port 39 which is capable of connecting a charging connector of a charging cable that is connected to an external power supply device. The charging port 39 may be provided anywhere, such as on the side plate portion 36a, as long as it is in the vicinity of a junction box 71 described below.

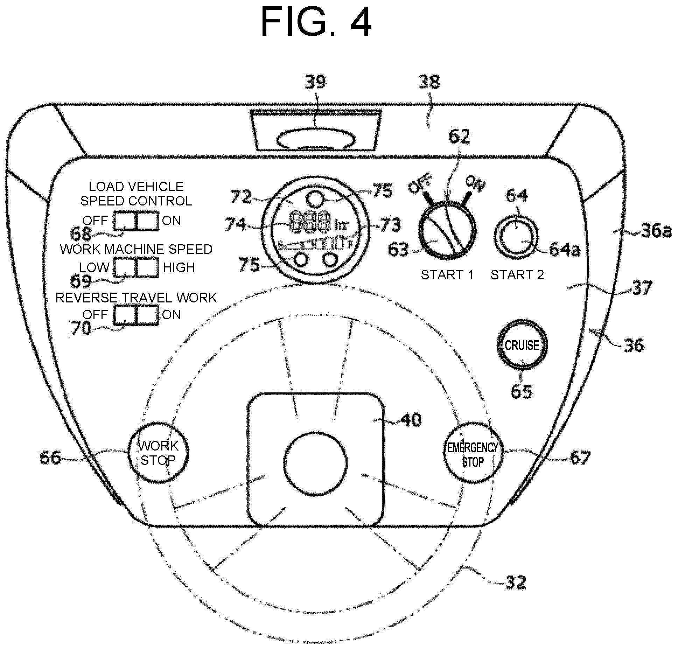

The steering panel 37 has a cylinder portion 40 that projects diagonally upward toward the rear side from the center of a lower end portion. The upper end portion of the steering shaft projects from an upper end plate portion of the cylinder portion 40. The steering panel 37 is provided with an operation switch group 62 (FIG. 4) described below.

The traveling motor 20, together with a power transmission unit 22, is supported between the left and right rear wheels 16 below the rear end portion of the vehicle body frame 12. A motor case of the traveling motor 20 is fixed to a unit case of the power transmission unit 22. As a result, the power transmission unit 22 and the traveling motor 20 are integrated. In this state, a rotating shaft of the traveling motor 20 is disposed along the left-right direction. The traveling motor 20 is, for example, a three-phase motor. The power transmission unit 22 includes a reduction gear mechanism and a differential mechanism inside the unit case, reduces the power of the traveling motor 20 and transmits the power to left and right axles 24 (FIG. 2) that are joined to the left and right rear wheels 16. Furthermore, the traveling motor 20 and the power transmission unit 22 are disposed under the driver's seat 51. The traveling inverter 42 (FIG. 3) described below is also disposed under the driver's seat 51. As a result, in a configuration where the battery 90 is mounted on the front side of the vehicle 10, the weight balance in the front-rear direction of the vehicle can be improved.

As shown in FIG. 5 described below, the traveling motor 20 has the battery 90 connected via the traveling inverter 42 and a main contactor 112 serving as a main switch that is provided inside the junction box (J/B) 71. As a result, the power from the battery 90 is supplied to the traveling motor 20. The main contactor 112 is controlled by the control device 46 described below, which switches the electrical connection and disconnection between the battery 90 and the traveling inverter 42 (traveling motor 20). The main switch inside the junction box (J/B) 71 may be a relay. As described in detail below, the battery 90 is fixed to, and supported by, the upper side of the vehicle body frame 12 in a state where it is covered by the bonnet 91 on the front side of the driver's seat 21.

The control device 46 controls the connection state of the main contactor 112 and controls the traveling inverter 42. The power of the traveling motor 20 is reduced by the reduction gear mechanism of the power transmission unit 22, and the reduced power is differentially transmitted to the left and right axles 24 by the differential mechanism to drive the left and right rear wheels 16 that are joined to the left and right axles 24. This causes the vehicle 10 to travel.

The lawn mowing device 18 is supported on the lower side of an intermediate portion of the vehicle body frame 12 in the front-rear direction such that it can be raised and lowered with respect to the ground surface. As a result, the lawn mowing device 18 is disposed between the front wheels 14 and the rear wheels 16 in the front-rear direction. The lawn mowing device 18 includes three lawn mowing blades 18a that are rotary lawn mowing tools disposed inside a mower deck 19 that serves as a cover. In FIG. 2, a circular movement trajectory of the leading end of each of the lawn mowing blades 18a is indicated by single -dotted lines a1, a2, and a3. The upper side of the lawn mowing blades 18a is covered by the mower deck 19. Each of the lawn mowing blades 18a has a plurality of blade elements that rotate around an axis directed in the vertical direction (the front-back direction with respect to the plane of the paper in FIG. 2). As a result, the blade elements rotate and can perform lawn mowing by cutting the lawn. Each of the three lawn mowing blades 18a has, among the three deck motors 26, a corresponding deck motor 26 connected thereto. Each of the deck motors 26 has the battery 90 connected via the deck inverter 44 (FIG. 3) provided for the corresponding deck motor 26, and power is supplied from the battery 90 to the deck motor 26. Each of the deck motors 26 is, for example, a three-phase motor.

The lawn mowing device may include, as a rotary lawn mowing tool, a lawn mowing reel that has a spiral blade disposed around a rotating shaft parallel to the ground surface that is driven by a deck motor.

FIG. 4 is a diagram of the operation switch group 62 on the upper portion of the steering column 36 in the vehicle 10 as viewed from above the vehicle 10. FIG. 5 is a circuit diagram of a control system 110 mounted on the vehicle 10. The operation switch group 62 is provided on the steering panel 37 of the steering column 36. The operation switch group 62 has a first start switch 63 and a second start switch 64 used to start-up the control system 110, a cruise switch 65, a working start switch 66, and an emergency stop switch 67. The first start switch 63 corresponds to an operation switch. The operation switch group 62 further has a load vehicle speed control switch 68, a working speed select switch 69, and a reverse work permission switch 70. In addition, a circular indicator 72 is provided on an upper portion of a central portion of the steering panel 37 in the left-right direction.

The first start switch 63 has a knob portion and is a two-position switch capable of switching between an ON position and an OFF position by being twisted. The second start switch 64 is a push-type switch that is turned on as a result of an operation portion 64a being pushed down, and is turned off by being returned upward by an internal spring force. Because the second start switch 64 does not have the function of self-maintaining the ON state, when the driver wants to maintain the ON state, it is necessary for the driver to manually keep the operation portion 64a pressed down.

When the control system 110 is started during travel, the second start switch 64 is turned on after the first start switch 63 is turned on. On the other hand, when the battery 90 is charged from an external charging facility, only the second start switch 64 is turned on, and the first start switch 63 is not turned on. As shown in FIG. 5, the operation signal of the first start switch 63 is input to the control device 46 (ECU). Furthermore, by turning on the second start switch 64, a voltage of the high-voltage battery 90, which holds a voltage for supplying power to various motors (such as 48 V), is input to the DC-DC converter 80 and is stepped down to the voltage for control signals (such as 12 V), and the control device 46 is started by the output voltage of the DC-DC converter 80. Here, when the second start switch 64 is turned on while the first start switch 63 is in the ON state, the control device 46 turns on, that is, closes, the main contactor connected between the battery 90 and the traveling motor 20, and maintains the ON state of the main contactor after the second start switch 64 is turned off. This completes the start of the control device 46 and the inverters 42 and 44, and the battery 90 provided in the vehicle can be only a high-voltage battery such as a 48 V battery. This eliminates the need to provide a low-voltage battery such as a 12 V battery in addition to the high-voltage battery in the bonnet for starting the control device 46. Therefore, the limited space inside the bonnet can be used for increasing the capacity of the battery 90.

The cruise switch 65 is provided to instruct execution of a cruise (automatic driving) mode when turned on. The cruise mode is a mode in which the vehicle speed set by the accelerator pedal position when the cruise switch 65 is turned on is stored, and the rotation speed of the traveling motor 20 is controlled so that the travel of the vehicle at the vehicle speed is maintained without operation of the accelerator pedal.

The working start switch 66 is a push-type switch provided to instruct switching between starting and stopping of the deck motors 26. The working start switch 66 is turned off and locked by being pressed down when an operation portion is in the ON state. The OFF state can be switched and locked to the ON state by applying a force in a pressing-down direction of the operation portion, and then twisting the operation portion in a predetermined direction. When switching from the ON state to the OFF state, there is no need to twist the operation portion. By simply pressing down the operation portion, the lock is released and the operation portion returns to the OFF position due to an internal spring force, resulting in the OFF state. As a result, if the lawn mowing device 18 needs to be turned off in an emergency, it can be quickly switched from the ON state to the OFF state by a simple pressing-down action of the operation portion, which leads to improvement of the safety of the vehicle.

The emergency stop switch 67 is provided for performing an emergency stop of both the traveling motor 20 and the deck motors 26 by a pressing-down operation, which is an ON operation. The configuration of the emergency stop switch 67 is similar to that of the working start switch 66, except that the ON position and the OFF position of the emergency stop switch 67 are opposite to the ON position and the OFF position of the working start switch 66. When switching the emergency stop switch 67 from the OFF position to the ON position, there is no need to twist an operation portion. By simply pressing the operation portion down by hitting it with the fist or palm of the hand, the power supply to the traveling motor 20 and the deck motors 26 is quickly shut off, and they are each stopped such that unpredictable circumstances can be avoided.

The load vehicle speed control switch 68 is a rocker-type switch and is provided to switch between an input for load vehicle speed control, that is, an execution state, and shut-off, that is, a deactivated state. The load vehicle speed control controls the traveling motor 20 so that the vehicle speed is automatically controlled according to the load of the deck motors 26 during cutting work. For example, if it is detected that the load of the deck motors 26 is high, the traveling motor 20 is controlled to reduce the vehicle speed that has been set with the accelerator pedal according to the detected load. On the other hand, if it is detected that the load of the deck motors 26 is low, the traveling motor 20 is controlled toward returning the vehicle to the vehicle speed that has been set with the accelerator pedal according to the detected load.

The working speed select switch 69 is also a rocker-type switch and is provided to switch the speed of the deck motors 26 to one of two levels, namely a predetermined speed on a high speed side and a predetermined speed on a low speed side.

The reverse work permission switch 70 is provided to switch between allowing reverse work, that is, allowing the lawn mowing device 18 to be driven while reversing, and prohibiting reverse work. If it is instructed by an operation of the reverse work permission switch 70 that reverse work is prohibited, the control device 46 forcibly stops the lawn mowing device 18 from being driven while the vehicle is being reversed. If it is instructed by an operation of the reverse work permission switch 70 that reverse work is allowed, the control device 46 disables the forced stoppage of the lawn mowing device 18 while the vehicle is being reversed. As a result, the driver can perform the work while reversing in a state where a safe situation is confirmed, which enables the work efficiency to be improved.

The indicator 72 has a remaining charge display unit 73 and a cumulative start time display unit 74. The remaining charge display unit 73 indicates each of an allowable lower limit and an allowable upper limit of the remaining charge of the battery 90 as E and F, and a lighting display between E and F indicates that the remaining charge is appropriate. Furthermore, as the lighting display gets closer to E, the driver can recognize that the traveling distance until the remaining charge becomes insufficient is short.

The cumulative start time display unit 74 displays the cumulative start time of the vehicle since the vehicle 10 left the manufacturing plant. The indicator 72 is also provided with a plurality of lamps 75 that indicate that the system is ready for startup and travel operation by lighting up. FIG. 4 illustrates the charging port 39 in a charging-ready state in which the opening is exposed. However, when not being used for charging, the charging port 39 is detachably covered by a lid that can be closed so as to be liquid-tight.

As shown in FIG. 5, the control system 110 includes the operation switch group 62 described above, the accelerator pedal sensor 60, a brake pedal sensor 76, and a seat sensor 77. The control system 110 further includes the traveling motor 20, the traveling inverter 42, the three deck motors 26 and deck inverters 44, the battery 90, the charging port 39, the DC-DC converter 80, and the control device 46. Into the control device 46, switching signals or detection signals are input from the operation switch group 62, the accelerator pedal sensor 60, the brake pedal sensor 76, and the seat sensor 77. In FIG. 5, of the operation switch group 62, only the first start switch 63, the second start switch 64, and the working start switch 66 are shown. However, switching signals from the other switches of the operation switch group 62 are also input to the control device 46. Furthermore, in FIG. 5, the traveling inverter 42, the deck inverters 44, the traveling motor 20, and the deck motors 26 are each shown as single components. However, in reality, the traveling inverter 42 and the three deck inverters 44 are connected in parallel on the power output side of junction box 71, and the traveling motor 20 and the deck motors 26 are each connected to the traveling inverter 42 and the deck inverters 44.

The brake pedal sensor 76 detects that the brake pedal (not shown) disposed on the floor on the front left of the driver's seat 51 has been depressed and operated. When a depressing detection signal is input to the control device 46 from the brake pedal sensor 76, the control device 46 deactivates the cruise mode and supplies power to the traveling motor 20 in a direction that generates reverse torque. In addition, the brake pedal is mechanically connected via a link mechanism (not shown) so as to move an operating arm (not shown) of the brake device built into the power transmission unit 22 to a brake operation position. Therefore, by depressing the brake pedal, the rotation of the rear wheels 16 is powerfully stopped by both electrical braking and mechanical braking.

The seat sensor 77 detects that the driver is seated in the driver's seat 51. For example, the control device 46 is configured to include an input of a seating detection signal from the seat sensor 77 as a condition for driving the traveling motor 20 and the deck motors 26.

The traveling inverter 42 drives the traveling motor 20. The traveling inverter 42 has, for example, a traveling inverter circuit including three arms each having two switching elements that are electrically connected in series, and a traveling inverter control device that controls the traveling inverter circuit. The traveling inverter 42 converts the DC power input from the battery 90 into AC power and outputs it to the traveling motor 20.

The operation of the traveling inverter 42 is controlled by the control device 46. As a result, the traveling motor 20 is controlled by the control device 46 via the traveling inverter 42, and power is supplied to the traveling motor 20 from the battery 90 via the traveling inverter 42. In FIG. 5, the bold lines represent the main contactor 112 and high-voltage power supply lines, such as 48 V lines, connected via a sub contactor 118 described below. The thin lines indicate low-voltage signal lines and power supply lines, such as 12 V lines, connected via only the main contactor 112. Furthermore, although not illustrated, the traveling inverter control device of the traveling inverter 42 has the detection value of a rotation frequency n(sec-1), which represents the rotation speed of the traveling motor 20, input from a motor speed sensor (not shown) provided in the traveling motor 20. The motor speed sensor detects the rotation frequency of the traveling motor 20. The detection value of the rotation frequency of the motor speed sensor is output to the control device 46.

Each of the deck inverters 44 drives the corresponding deck motor 26. Like the traveling inverter circuit and the traveling inverter control device of the traveling inverter 42, each of the deck inverters 44 also has a deck inverter circuit and a deck inverter control device that controls the deck inverter circuit. Each of the deck motors 26 is controlled by the control device 46 via the deck inverter 44, and power is supplied to the deck motors 26 from the battery 90 via the deck inverters 44. Consequently, each of the lawn mowing blades 18a is rotated and driven by the corresponding deck motor 26, and each of the deck motors 26 is driven so as to maintain a predetermined target rotation frequency set by the working speed select switch 69 described above. The lawn cut by the lawn mowing device 18 is discharged to one side in the left-right direction of the vehicle 10 through a discharge duct provided on the one side in the left-right direction of the mower deck 19.

Further, the deck inverter control device of each of the deck inverters 44 has the detection value of the rotation frequency n (sec-1), which represents the rotation speed of the deck motor 26, input from a deck motor speed sensor (not shown). Each of the deck motor speed sensors detects the rotation frequency, which represents the rotation speed of the corresponding deck motor 26. The detection value of the rotation frequency of the deck motor speed sensor is output to the control device 46 via the corresponding deck inverter 44.

The control device 46 includes an arithmetic unit such as a CPU and a storage unit such as a memory, and is configured by, for example, a microcomputer.

Moreover, the charging port 39 is connected to the battery 90 via the main contactor 112 inside the junction box 71. As a result, in a state where a charging connector 114 of a charging cable 113 connected to an external charging facility is connected to the charging port 39, the battery 90 can be charged from the external charging facility via the main contactor 112. At this time, a battery control device (BMS) 90a is fixed to the upper end of the battery 90. When the battery control device 90a receives a signal indicating that the charging connector 114 is connected to the charging port 39, the battery control device 90a and a charger 115 provided on the charging cable 113 communicate. Then, when predetermined charging conditions are met, the battery control device 90a causes the external charging facility to start charging the battery 90 via the charger 115.

In addition, the junction box 71 includes a fuse 116 connected between the battery 90 and the main contactor 112, and the sub-contactor 118 connected between the main contactor 112 and the inverters 42 and 44. When the main contactor 112 is turned on as a result of starting the system as described above, low-voltage power and signals are supplied to the inverters. As a result, when the control device 46 senses that the inverters have been started, the control device 46 turns on the sub-contactor 118. Furthermore, the control system 110 includes a battery malfunction response relay 120 and a battery start relay 122. The battery malfunction response relay 120 is provided in the middle of the signal line that outputs control signals from the control device 46 to the main contactor 112, and is turned on during normal operation. On the other hand, when the battery control device 90a detects a malfunction of the battery 90, it outputs a battery malfunction detection signal to the control device 46. When the control device 46 receives the detection signal, it turns off the main contactor 112 by turning off the battery malfunction response relay 120.

The battery start relay 122 is connected between the battery control device 90a and the output side terminal of the DC-DC converter 80. When the charging connector 114 of the charging cable 113 is connected to the charging port 39 during charging, and the control device 46 is started when the second start switch 64 is turned on, the control device 46 turns on the battery start relay 122 and starts the battery control device 90a. As a result, the battery control device 90a is capable of communicating with the charger 115, and charging of the battery 90 from the external charging facility is started when the predetermined conditions are satisfied.

Furthermore, the battery malfunction response relay 120 and the battery start relay 122 may be included in a single relay unit. The relay unit may be fixed together with the control device 46 to the rear side surface of the metal second plate 88 that divides the space inside the bonnet described below. This allows the relay unit to dissipate heat more easily, and a temperature rise of the relay unit can be suppressed.

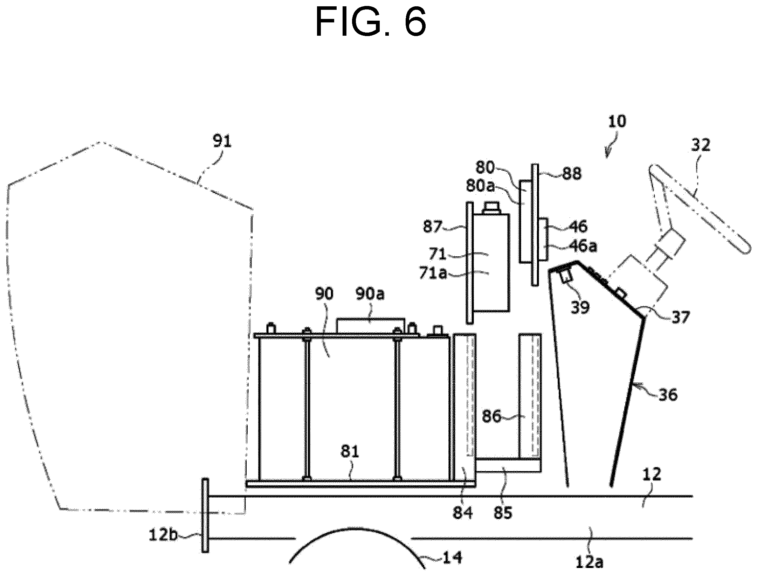

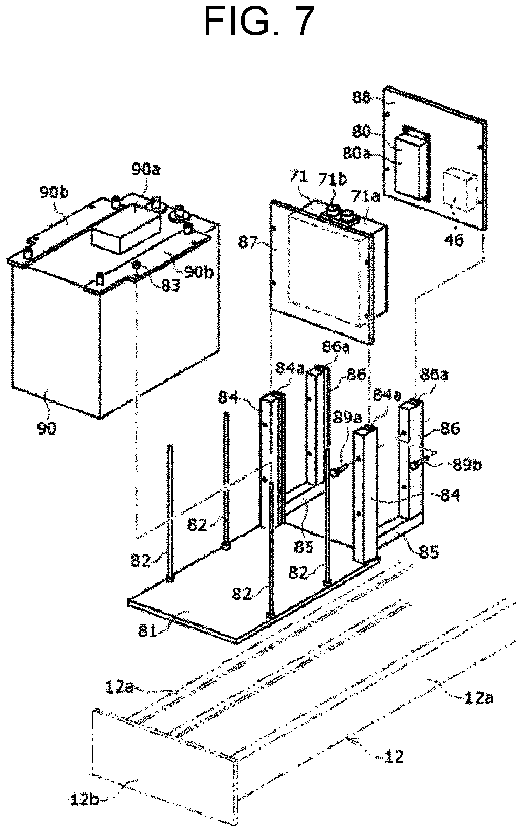

Next, the arrangement structure of each of the battery 90, the junction box 71, and the inverters 42 and 44 of the vehicle 10 will be described using FIGS. 6 to 8. FIG. 6 is a diagram corresponding to the front side part of FIG. 1 that illustrates a state where the bonnet 91 is open, and the junction box 71 and the DC-DC converter 80 have been taken out. FIG. 7 is a perspective view illustrating a state immediately before the battery mount 81, the battery 90, the junction box 71, and the DC-DC converter 80 are mounted on the front side part of the vehicle body frame 12 of the vehicle.

First, with reference to FIG. 1, the battery 90 is provided on the front side of the steering column 36 and disposed from the front side of the space inside the bonnet, which is covered by the bonnet 91 to an intermediate portion in the front-back direction. Specifically, the bonnet 91 is constituted by two side plate portions on the left and right, a top plate portion joining the upper ends of the two side plate portions, and a front plate portion that closes the opening formed by the top plate portion and the front ends of the two side plate portions. A lower end portion on the front side of the bonnet 91 is mounted and supported so as to be capable of swinging along a fulcrum shaft provided at the front end portion of the vehicle body frame 12 in the left-right direction. As a result, as shown in FIG. 6, in a state where the rear end of the bonnet 91 is moved so as to stand facing upward, the space that was covered by the bonnet 91 and the equipment and components such as the battery 90 disposed in that space can be opened to the outside.

The battery 90 is fixed to the upper side of the front of the vehicle body frame 12 via the battery mount 81. Specifically, with reference to FIG. 2, the battery mount 81 having a rectangular, flat shape, is fixed to the upper side of both side frames 12a so as to straddle both side frames 12a. As shown in FIG. 7, both the left and right end portions of the battery mount 81 are each provided with two shaft portions 82 having a threaded portion formed on at least an upper end portion, which are fixed with a separation on the front and rear and provided so as to penetrate the battery mount 81 from below and stand toward the upper side. Mounting plates 90b extending in the front-rear direction and protruding outward in a lateral direction are fixed to the both the left and right end portions of the upper end of the battery 90. The battery 90 is disposed on the upper surface of the battery mount 81 so that the shaft portions 82 penetrate from below through holes formed in the front and rear of each of the mounting plates 90b. In this state, the battery 90 is fixed to the battery mount 81 by nuts 83 fixed to the threaded portions on the upper ends of the shaft portions 82. FIG. 7 shows only the nut 83 coupled with one of the shaft portion 82, but the same applies to the nuts coupled with the other shaft portions 82.

In addition, a pair of first columns 84 are fixed so as to stand on the end portions on the rear side in the both left and right end portions of the battery mount 81, and second columns 86 are fixed so as to stand up via a connecting portion 85 extending in the front-rear direction on a lower end portion of the rear surface of each of the first columns 84. As a result, the pair of first columns 84 and the pair of second columns 86 are fixed to the rear side of the battery mount 81. Furthermore, the two first columns 84 are fixed to the front upper side of the vehicle body frame 12 with a separation on the left and right. The two second columns 86 are fixed to the front upper side of the vehicle body frame 12 on the rear side of the two first columns 84 with a separation on the left and right.

In the present example, the second columns 86 and the connecting portions 85 are formed of single members substantially having an L-shape as a whole. On the other hand, the second columns and the connecting portions may be formed of separate members and may have substantially an L-shape as a whole by being integrally fixed by a fastener such as a bolt and nut.

The first columns 84 are made of a metal such as steel, and each has a first groove 84a, which is formed along the entire length in the up-down direction in the inner side surface facing the center in the left-right direction, and has a rectangular shape in cross-section that is open toward the center in the left-right direction. The width of the first groove 84a corresponds to the thickness of a first plate 87. Each of the first columns 84 is provided at the same position in the front-rear direction, and the first groove 84a of each of the first columns 84 is also provided at the same position in the front-rear direction.

The second columns 86 are made of a metal such as steel, and like the first columns, each has a second groove 86a, which is formed along the entire length in the up-down direction in the inner side surface facing the center in the left-right direction. The width of the second groove 86a corresponds to the thickness of a second plate 88. Each of the second columns 86 is provided at the same position in the front-rear direction, and the second groove 86a of each of the second columns 86 is also provided at the same position in the front-rear direction.

Both the left and right ends of the first plate 87 are inserted into the first groove 84a of each of the first columns 84. The first plate 87 has, for example, a flat plate shape. In this state, bolts 89a that penetrate the holes in the front-rear direction at a plurality of positions in the up-down direction of the first column 84 also penetrate the holes formed in both the left and right ends of the first plate 87 in the first groove 84a. Both the left and right ends of the first plate 87 are fixed to each of the first columns 84 by nuts (not shown) fixed to the leading end portions of the bolts 89a that penetrate the first column 84. In FIG. 7, only the bolt 89a penetrating one of the holes in one of the first columns 84 is shown, but the same applies to the bolts penetrating the other first columns 84 and the other holes.

As a result, the first plate 87 is disposed on the rear side of the battery 90 in the space inside the bonnet, divides a portion of the space inside the bonnet into front and rear spaces, and is provided so as to stand in the space inside the bonnet. The first plate 87 is formed of metal such as iron, an aluminum alloy, and the like.

The battery 90 is disposed further toward the front than the front side surface of the first plate 87, and the junction box 71 is attached to the rear side surface of the first plate 87 by being fixed thereto. The junction box 71 accommodates electrical components such as the main contactor 112, busbars, and the fuse 116 in a box-shaped case 71a formed of metal such as iron, an aluminum alloy, and the like. Furthermore, on an upper end of the case 71a, a connector 71b is provided for connecting wiring to the electrical components in the case 71a from the outside. Note that, instead of the connector 71b, wiring can be connected to the electric components inside through an opening formed in an upper end of the case 71a. The case 71a is disposed in a vertical arrangement in the space inside the bonnet so that the front-rear direction length becomes shorter than the up-down direction length and the left-right direction length. The heat generated from the various electrical components is dissipated from the case 71a and the first plate 87.

Further, both left and right ends of the second plate 88 are inserted into the second groove 86a of each of the second columns 86. The second plate 88 has, for example, a flat plate shape. In this state, bolts 89b that penetrate the holes in the front-rear direction at a plurality of positions in the up-down direction of the second column 86 also penetrate the holes formed in both the left and right ends of the second plate 88 in the second groove 86a. Both the left and right ends of the second plate 88 are fixed to each of the second columns 86 by nuts (not shown) fixed to the leading end portions of the bolts 89b that penetrate the second column 86. In FIG. 7, only the bolt 89b penetrating one of the holes in one of the second columns 86 is shown, but the same applies to the bolts penetrating the other second columns 86 and the other holes.

As a result, the second plate 88 divides a portion of the space inside the bonnet on the rear side of the first plate 87 in the space inside the bonnet into front and rear spaces, and is provided so as to stand in the space inside the bonnet. Like the first plate 87, the second plate 88 is formed of metal.

The DC-DC converter 80 is attached to the front side surface of the second plate 88. The DC-DC converter 80 has a converter circuit accommodated in a case 80a. The case 80a has a box shape and is formed of metal such as iron, an aluminum alloy, and the like. In the case 80a, connectors or openings for connecting wiring are formed in a similar fashion to the junction box 71.

The control device 46 is attached to the rear side surface of the second plate 88. The control device 46 accommodates a control circuit in a case 46a. The case 46a also has a box shape formed of metal, like the case 80a. In the case 46a, connectors or openings for connecting wiring are formed in a similar fashion to the DC-DC converter 80 and the junction box 71. The control device 46 and a heat sink (not shown) of the DC-DC converter 80 are brought into close contact with an outer surface of the second plate 88.

When maintenance work such as inspection of at least one of the junction box 71, the DC-DC converter 80, and the control device 46 is to be performed, as shown in FIG. 6, the operator moves the rear end of the bonnet 91 so as to face upward to open the inside of the bonnet 91. In this state, by removing the bolts and nuts that fix each of the first columns 84 and the first plate 87, and the second columns 86 and the second plate 88, and by pulling out each of the plates 87 and 88 to the upper side from each of the columns 84 and 86, the junction box 71, the DC-DC converter 80, and the control device 46 can be removed from the vehicle. As a result, maintenance work can be performed efficiently in a large area with favorable workability. The first plate and the second plate do not have to be configured to be inserted into grooves along the up-down direction of the columns. Even in this case, in a state where the inside of the bonnet 91 is open, the junction box 71, the DC-DC converter 80, and the control device 46 are disposed above the lower end of the battery 90. Therefore, maintenance work can be simplified compared to a case where a target component for maintenance is disposed below the battery 90.

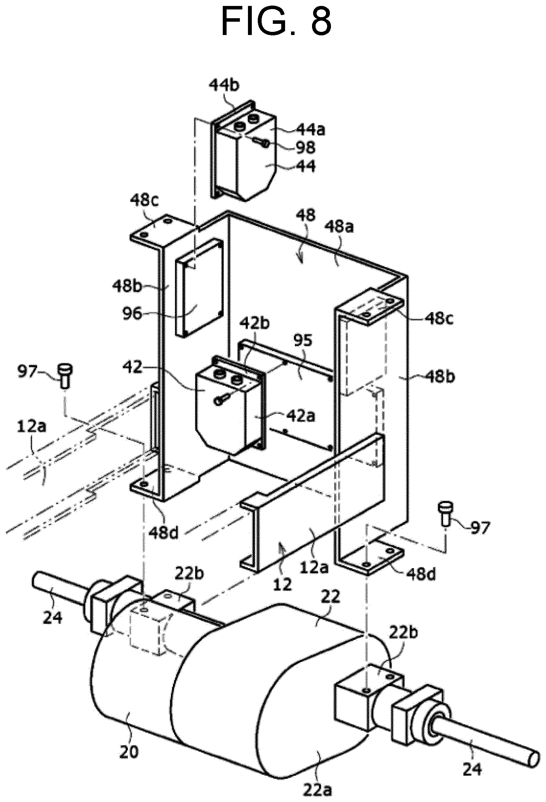

FIG. 8 is a perspective view illustrating a state immediately before the inverter mounting member 48 and the inverters 42 and 44 are mounted on the upper side of the power transmission unit 22. With reference to FIGS. 1, 3, and 8, in the present example, the traveling inverter 42 is disposed under the driver's seat 51 in addition to the traveling motor 20 and the power transmission unit 22. Specifically, the inverter mounting member 48 is provided so as to stand on the upper surface of the power transmission unit 22. The inverter mounting member 48 has a main body plate portion 48a that extends in the left-right direction and in the up-down direction and has a thickness direction facing the front-back direction, and two side plate portions 48b that extend from both left and right end portions of the main body plate portion 48a to the front side in the front-rear direction. The upper end portion and the lower end portion of each of the side plate portions 48b is formed with an upper flange 48c and a lower flange 48d that extend toward the outside in the left-right direction.

The inverter mounting member 48 is fixed to the lower side of the rear of the two side frames 12a on the left and right of the vehicle body frame 12 so as to be sandwiched in the left-right direction. As a result, the inverter mounting member 48 serves as a strength member as the rear end portion of the vehicle body frame 12, and also functions as a suspension member of the power transmission unit 22 in the vehicle body frame 12.

The lower flanges 48d of the inverter mounting member 48 are fixed by a screw connection using screws 97 to the upper end of mounting plates 22b having a substantially rectangular cylindrical shape provided on both the left and right end portions of a unit case 22a of the power transmission unit 22. The upper flanges 48c of the inverter mounting member 48 are fixed by a screw connection to the support member 52, which has the driver's seat 51 provided on the upper side. As a result, the driver's seat 51 is indirectly fixed to the upper end portion of the inverter mounting member 48 via the support member 52. The driver's seat 51 may be directly fixed to the upper end portion of the inverter mounting member 48.

The traveling inverter 42 accommodates the traveling inverter circuit and the traveling inverter control device inside a first case 42a. The deck inverters 44 accommodate the deck inverter circuit and the deck inverter control device in a second case 44a. At least one of the inverters among the traveling inverter 42 and the deck inverters 44 is mounted on the front side surface of the main body plate portion 48a of the inverter mounting member 48. Moreover, one of the traveling inverter 42 and the deck inverters 44 is mounted on the front side surface of the main body plate portion 48a, and the others are mounted on the inside surfaces of the side plate portions 48b. Here, heat dissipation plates 95 and 96 made of a metal having high heat dissipation characteristics such as an aluminum alloy are interposed between each of the traveling inverter 42 and the deck inverter 44 and the inverter mounting member 48. The heat dissipation plates 95 and 96 are brought into contact with heat sinks 42b and 44b provided on each of the traveling inverter 42 and the deck inverters 44. The heat dissipation plates 95 and 96 are fixed to the inverter mounting member 48, and the heat dissipation plates 95 and 96 and the heat sinks 42b and 44b are fixed by a screw connection using screws. As a result, the traveling inverter 42 and the deck inverters 44 are disposed under the driver's seat 51. The wind flowing from the front to the rear of the vehicle during travel is sent into a space enclosed by the inverter mounting member 48. Therefore, heat dissipation is promoted from the inverter mounting member 48. An opening for air ventilation may be provided as appropriate in the main body plate portion 48a.

In FIG. 3, the two inverters 42 and 44 are fixed to the lower side of the main body plate portion 48a of the inverter mounting member 48, and one of the deck inverters 44 is fixed to each of the side plate portions 48b of the inverter mounting member 48. However, it not limited to this configuration. The arrangement positions of the inverters 42 and 44 with respect to the inverter mounting member 48 can be changed according to the arrangement relationship and the like of components around the inverter mounting member 48. For example, the four inverters 42, 44 may be fixed only to the inner side surface of the main body plate portion 48a. In FIG. 8, some of the inverters are not shown.

The foregoing has described a case where the rear wheels 16 are driven by the traveling motor 20, However, a configuration is possible in which the front wheels are driven by the traveling motor, or both the front wheels and the rear wheels are driven by the traveling motor.

According to the vehicle 10 described above, the battery 90 is mounted and supported on the front of the vehicle body frame 12, and the traveling motor 20, the power transmission unit 22, and the traveling inverter 42 are mounted and supported on the rear of the vehicle body frame such that they are disposed under the driver's seat 51.
As a result, in a vehicle having the battery 90 mounted on the front side, the weight balance in the front-rear direction of the vehicle can be improved.

Furthermore, the vehicle 10 includes the deck motors 26 that are connected to the battery 90 via the deck inverters 44, the lawn mowing device 18 that is driven by the deck motors 26, and the inverter mounting member 48 having the main body plate portion 48a that is provided so as to stand on the upper surface of the power transmission unit 22 and extends in the left-right direction and in the up-down direction. At least one of the inverters among the traveling inverter 42 and the deck inverters 44 is mounted on the front side surface of the main body plate portion 48a. As a result, the inverter attached to the front side surface of the main body plate portion 48a can more easily dissipate heat by receiving a traveling wind when the vehicle moves forward. Consequently, a temperature rise of the inverter can be suppressed, and the operational stability (suppression of thermal runaway) and durability of the inverter can be improved.

Moreover, the inverter mounting member 48 has the two side plate portions 48b extending in the front-rear direction from both the left and right end portions of the main body plate portion 48a, one of the traveling inverter 42 and the deck inverters 44 is attached to the front side surface of the main body plate portion 48a, the others are attached to the inside surfaces of the side plate portions 48b, and an upper end portion of the inverter mounting member 48 has the driver's seat 51 seat directly fixed thereto, or indirectly fixed via the support member 52. As a result, heat is more easily dissipated from each of the inverters 42 and 44, and the weight balance is more easily improved even when the weight of the front side of the vehicle is increased. Moreover, the rigidity of the inverter mounting member 48 can be increased.

In addition, the heat dissipation plates 95 and 96 are interposed between each of the traveling inverter 42 and the deck inverters 44 and the inverter mounting member 48, and the heat dissipation plates 95 and 96 are in contact with the heat sinks 42b and 44b provided on the inverters 42 and 44. As a result, heat dissipation becomes even easier from each of the inverters 42 and 44.

Also, according to the vehicle 10 described above, the battery 90 is disposed on the front side of the space inside the bonnet on the front side of the steering column 36, and the junction box 71 is disposed in a vertical arrangement further toward the rear side than the battery 90. As a result, it is possible to lower the center of gravity of the vehicle 10 compared to a case where the junction box 71 is disposed below the battery 90. Furthermore, it possible to shorten the wiring distance in a configuration where the main contactor 112 is switched by using the operation switch, and it is possible to prevent the length of the bonnet space in the front-rear direction from becoming excessively large compared to a case where the junction box 71 is disposed in a state in which it extends in the front-rear direction.

Moreover, in the vehicle 10, the space inside the bonnet has the metal first plate 87 that is provided so as to stand and divide the space inside the bonnet into front and rear spaces, and the battery 90 is disposed further forward than the front side surface of the first plate 87, and the junction box 71 is attached to the rear side surface of the first plate 87. As a result, the junction box 71 can be more separated from the components further toward the front side by using the first plate 87. Therefore, maintenance work of the junction box 71 can be simplified. In addition, because the first plate 87 can be provided with a heat dissipation function, a temperature rise inside the junction box 71 can be suppressed. As a result, the durability of the components inside the junction box 71 can be improved.

Further, in the vehicle 10, the space inside the bonnet has the metal second plate 88 that is provided so as to stand and divide the space inside the bonnet on the rear side of the first plate 87 into front and rear spaces, and the DC-DC converter 80 is attached to the front side surface of the second plate 88. Also, the control device 46 is mounted on the rear side surface of the second plate 88, and the control device 46 is electrically connected to the junction box 71 via the DC-DC converter 80. As a result, the control device 46 can be more separated from the components further toward the front side by using the second plate 88. Therefore, maintenance work of the control device 46 can be simplified. Moreover, because the battery 90, the junction box 71, the DC-DC converter 80, and the control device 46 can be arranged in order from the front side, the wiring path of the circuit connecting the battery 90 and the control device 46 via the junction box 71 and the DC-DC converter 80 can be shortened. In addition, because the second plate 88 can be provided with a heat dissipation function, a temperature rise of the DC-DC converter 80 and control device 46 can be suppressed. This makes it possible to improve the durability of the DC-DC converter 80 and the control device 46.

Also, the vehicle 10 includes the two first columns 84 that are fixed on the upper side of the vehicle body frame 12 and separated left and right, and the two second columns 86 that are fixed on the upper side of the vehicle body frame 12 on the rear side of the two first columns 84 and separated left and right. Both the left and right ends of the first plate are inserted into the first groove provided in the two first columns along the up-down direction, and both the left and right ends of the second plate are inserted into the second groove provided in the two second columns along the up-down direction. As a result, the junction box 71 can be integrated with the first plate 87, and the DC-DC converter 80 and the control device 46 can be integrated with the second plate 88 and can be easily pulled out to the upper side and removed from the vehicle 10. Therefore, maintenance work of the junction box 71, the DC-DC converter 80, and the control device 46 can be further simplified.

Further, the vehicle body frame 12 is provided with the side frames 12a along the machine front-rear direction, the battery mount 81 is fixed to the upper side of both side frames 12a so as to straddle both side frames 12a, and the pair of first columns 84 and the pair of second columns 86 are fixed to the rear side of the battery mount 81. As a result, the work of mounting the battery 90, the junction box 71, the DC-DC converter 80, and the control device 46 to the vehicle 10 can be further simplified by interposing a common battery mount 81 between the battery 90, the junction box 71, the DC-DC converter 80, and the control device 46.

### REFERENCE SIGNS LIST

10 Electric work vehicle (vehicle)
12 Vehicle body frame
14 Front wheel
16 Rear wheel
18 Lawn mowing device (work implement)
19 Mower deck
20 Traveling motor
22 Power transmission unit
24 Axle
26 Deck motor (working motor)
32 Steering wheel
34 Steering shaft
36 Steering column
37 Steering panel
38 Upper end plate portion
39 Charging port
42 Traveling inverter
44 Deck inverter
46 Control device (ECU)
48 Inverter mounting member
51 Driver's seat
52 Support member
60 Accelerator pedal sensor
62 Operation switch group
63 First start switch
64 Second start switch
65 Cruise switch
66 Working start switch
67 Emergency stop switch
68 Load vehicle speed control switch
69 Working speed select switch
70 Reverse work permission switch
71 Junction box
72 Indicator
73 Remaining charge display unit
74 Cumulative start time display unit
75 Lamp
76 Brake pedal sensor
77 Seat sensor
80 DC-DC converter
81 Battery mount
82 Shaft portion
83 Nut
84 First column
85 Connecting portion
86 Second column
87 First plate
88 Second plate
89a, 89b Bolt
90 Battery
91 Bonnet
95, 96 Heat dissipation plate
97, 98 Screw
100 Control unit
110 Control system
112 Main contactor (main switch)
113 Charging cable
114 Charging connector
115 Charger
116 Fuse
118 Sub-contactor
120 Battery malfunction response relay
122 Battery start relay

## Claims

1. An electric work vehicle, comprising:
a vehicle body frame;
front wheels and rear wheels supported by the vehicle body frame;
a driver's seat provided above a rear end portion of the vehicle body frame;
a traveling motor for driving the rear wheels;
a power transmission unit that is integrated with the traveling motor, and that reduces a power of the traveling motor and transmits the power to an axle joined to the rear wheels; and
a battery that supplies power to the traveling motor via a first inverter; wherein
the battery is mounted and supported on a front side of the vehicle body frame, and
the traveling motor, the power transmission unit, and the first inverter are mounted and supported on a rear side of the vehicle body frame so as to be disposed under the driver's seat.

2. The electric work vehicle according to claim 1, comprising:
a working motor that is connected to the battery via a second inverter;
a work implement that is driven by the working motor; and
an inverter mounting member that is provided so as to stand on an upper surface of the power transmission unit, and has a main body plate portion extending in a left-right direction and an up-down direction; wherein
at least one of the inverters among the first inverter and the second inverter are attached to a front side surface of the main body plate portion.

3. The electric work vehicle according to claim 1, wherein
the inverter mounting member has two side plate portions extending in a front-rear direction from both left and right end portions of the main body plate portion,
one of the first inverter and the second inverter is attached to the front side surface of the main body plate portion, and the other is attached to an inside surface of the side plate portion, and
an upper end portion of the inverter mounting member has the driver's seat directly fixed thereto, or indirectly fixed via a support member.

4. The electric work vehicle according to claim 1, wherein
a heat dissipation plate is interposed between the inverter mounting member and each of the first inverter and the second inverter, and
the heat dissipation plate makes contact with a heat sink provided in each of the first inverter and the second inverter.

5. The electric work vehicle according to claim 1, comprising:
the vehicle body frame;
the front wheels and the rear wheels supported by the vehicle body frame;
a traveling motor that drives at least one of the front wheels and the rear wheels;
a steering column that covers a lower side of a steering shaft supported by the vehicle body frame, and is a steering column having an operation switch provided in an upper portion thereof;
the battery that is provided on a front side of the steering column and disposed on a front side of a space inside a bonnet, which is covered by the bonnet, and provides power to the traveling motor; and
a junction box disposed further on a rear side in the space inside the bonnet than the battery, and which contains a switch that switches between electrical connection and disconnection of the battery and the traveling motor; wherein
the junction box is disposed in a vertical arrangement in the space inside the bonnet such that a front-rear direction length becomes shorter than an up-down direction length and a left-right direction length.

6. The electric work vehicle according to claim 1, wherein
the space inside the bonnet has a metal first plate that is provided so as to stand and divide the space inside the bonnet into front and rear spaces, and
the battery is disposed further forward than a front side surface of the first plate, and the junction box is attached to a rear side surface of the first plate.

7. The electric work vehicle according to claim 1, wherein
the space inside the bonnet has a metal second plate that is provided so as to stand and divide the space inside the bonnet further on a rear side than the first plate into front and rear spaces,
a DC-DC converter is attached to a front side surface of the second plate, and a control device is attached to a rear side surface of the second plate, and
the control device is electrically connected to the junction box via the DC-DC converter.

8. The electric work vehicle according to claim 1, comprising:
two first columns that are fixed to an upper side of the vehicle body frame and separated left and right; and
two second columns that are fixed to the upper side of the vehicle body frame on a rear side of the two first columns and separated left and right; wherein
both left and right ends of the first plate are inserted into a first groove provided in the two first columns along an up-down direction, and
both left and right ends of the second plate are inserted into a second groove provided in the two second columns along an up-down direction.

9. The electric work vehicle according to claim 1, wherein
the vehicle body frame is provided with side frames along a machine front-rear direction,
a battery mount is fixed to an upper side of both side frames so as to straddle both side frames, and
a pair of the first columns and a pair of the second columns are fixed to a rear side of the battery mount.
